# EUROPEAN PATENT APPLICATION

(11) **EP 1 488 868 A1**
(43) Date of publication of application: **22.12.2004**
(21) Application number: 04253554.2
(22) Date of filing: 14.06.2004
(51) Int. Cl.: B21D 26/02, B21D 26/06, B21D 26/12, B21D 53/88, B62D 21/02

(54) **Method of manufacturing a vehicle frame component by high velocity hydroforming**

(30) Priority: 20.06.2003 US 600960
(71) Applicant: DANA CORPORATION, Toledo, OH 43615 (US)
(72) Inventor: Kiehl, Mark W, Bernville, Pennsylvania 19506 (US)
(74) Representative: Giles, Ashley Simon

(57) **Abstract**

A method for high velocity hydroforming a vehicle frame member including providing a hollow tubular member (30) and a die having an internal die cavity (28). The tubular member is positioned within the die cavity and filled with a fluid. A shock wave is created within the fluid, thereby causing hyperplastic forming of the tubular member to expand it outwardly into conformance with the shape of the die cavity. The shock wave can be created by discharging an electric arc between a pair of electrodes (46) submerged within the fluid. The ends (32) of the tubular member can be fed into the die cavity during expansion to provide for a relatively uniform wall thickness in the deformed tubular member.

## Description

### BACKGROUND OF THE INVENTION

This invention relates in general to vehicle frame components, and in particular to an improved method for manufacturing vehicle frame components by a high velocity hydroforming process.

A vehicle, such as an automobile or light truck, includes among its major structural components a body, an engine, a drive train, and a suspension system. The vehicle further includes a vehicle frame which serves as a platform for the other components. The body and engine are stacked on top of the vehicle frame, and the drive train and suspension system are hung underneath it.

The vehicle frame typically includes two elongated and parallel side rails having a plurality of cross members extending therebetween to connect them together. The cross members extend generally perpendicular to the side rails and parallel with one another.

In the past, vehicle frame components, such as side rails, were manufactured from open channel structural members (i.e., structural members having a noncontinuous cross sectional shape, such as C-shaped or hat-shaped channel members, for example) which were shaped and secured together to form the vehicle frame assembly. Such open channel structural members are relatively easy and inexpensive to shape into desired configurations and to secure together. More recently, however, it has been found desirable to form many of the vehicle frame components from closed channel structural members (i.e., structural members having a continuous cross sectional shape, such as tubular or box-shaped channel members, for example). Generally speaking, closed channel structural members are stronger and more rigid than open channel structural members of comparable weight. Because of these and other reasons, hydroforming has found recent acceptance in the field of vehicle frame component manufacture.

Hydroforming is a well known process which uses pressurized fluid to deform a hollow member into a desired shape. The hollow member is initially disposed between two movable die sections of a hydroforming apparatus which, when closed together, define a die cavity having a desired final shape for the hollow member. Although the die cavity is usually somewhat larger than the pre-formed hollow member itself, the closure of the two die sections may, in some instances, cause some mechanical deformation of the hollow member. Thereafter, the hollow member is filled with a pressurized fluid, typically a relatively incompressible liquid such as water. The pressure of the fluid is increased at a relatively slow rate to a magnitude where the hollow member is expanded outwardly into conformance with the die cavity. As a result, the hollow member is deformed into the desired final shape for the workpiece.

Although the manufacture of vehicle frame components by past hydroforming processes has been satisfactory, the amount of cross-sectional expansion of the tubular member is limited. This is particularly true for metals which are less formable than steel, such as aluminum and magnesium. Thus, it would be desirable to have a method of manufacturing tubular metal vehicle frame components by a hydroforming process permitting greater expansion capabilities of the metal.

### SUMMARY OF THE INVENTION

This invention relates to an improved method of manufacturing vehicle frame components by high velocity hydroforming. A hollow tubular member is provided which is placed within a die. The die has an internal die cavity sized and shaped to match the desired shape of the final high velocity hydroformed vehicle frame component. The tubular member is then filled with a fluid, such as water or oil. A shock wave is created within the fluid, thereby causing the tubular member to rapidly expand outwardly to conform to the shape of the die cavity.

The shock wave can be created by using an electric shock wave generator. The electric shock wave generator may include a capacitor bank which is electrically connected to a pair of electrodes submerged within the fluid. The electrodes are spaced a relatively small distance apart. Electric energy is built up in the capacitor which is then rapidly discharged to form an electric arc across the electrodes. The electric arc rapidly vaporizes the surrounding fluid and creates a high pressure pulse or shock wave which is propagated at a relatively high velocity through the fluid.

The shock can also be created by a mechanical shock wave generator. A mechanical shock wave generator can include a fluid cylinder having a piston armature disposed therein. The fluid cylinder is filled with fluid which communicates with the fluid within the interior of the tubular member. An electromagnet is energized to rapidly accelerate the piston armature in a direction towards the tubular member, thereby creating a shock wave in the fluid.

An additional step of end feeding may be performed during the high velocity hydroforming process. During end feeding, one or both of the ends of the tubular member are pushed inwardly towards the die cavity during expansion and deformation of the tubular member. End feeding helps to provide a relatively uniform wall thickness throughout the length of the tubular member during deformation.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a schematic perspective view of a vehicle frame including component members which are formed by a high velocity hydroforming process, in accordance with the present invention.
Fig. 2 is a schematic sectional view of an apparatus for performing the high velocity hydroforming process of the present invention.
Fig. 3 is a schematic sectional view of the apparatus illustrated in Fig. 2, illustrating a forming step of the present invention.
Fig. 4 is a schematic sectional view of an alternate embodiment of an apparatus for performing a high velocity hydroforming process of the present invention.

### DETAILED DESCRIPTION OF THE PREFERRED EMBODIMENT

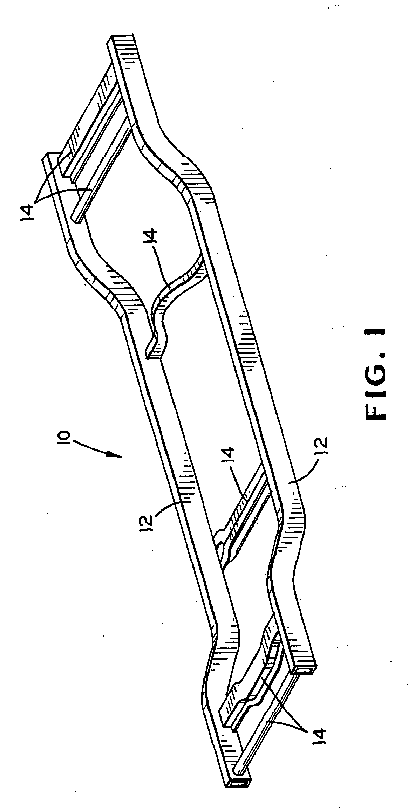

Referring now to the drawings, there is illustrated in Fig. 1 a vehicle frame, indicated generally at 10. The vehicle frame 10 is made of various components which can be manufactured by a high velocity hydroforming process, in accordance with the present invention, as will be explained in detail below. The vehicle frame 10 includes a pair of side rails 12 which are spaced apart and extend generally parallel with one another. Each side rail 12 is generally in the shape of an elongated beam having various bends formed therein. A plurality of cross members 14 extend between the side rails 12 to connect them together. Each cross member 14 is generally in the shape of a beam which is relatively shorter than a side rail 12. The cross members 14 are spaced apart and extend generally perpendicular to the side rails 12 and generally parallel with one another. The side rails 12 and the various cross members 14 can be made from any suitable material, such as steel, aluminum, magnesium, or other suitable metal alloys.

The side rails 12 may be made as a single member which extends the whole length of the vehicle. Alternatively, the side rails 12 may be formed from two or more pieces which are joined together by bolts, rivets, welds or any other suitable fastening means to form the desired length of the side rails 12. The linear shape of the side rails 12 may vary along its length, ranging from generally straight to having one or more bends. The side rails 12 have a tubular or continuous cross-sectional shape. Typically, the cross-sectional shape of the side rails 12 is rectangular or box-shaped. One or more portions of the side rails 12 may have one cross sectional shape while the remaining portions have a different cross-sectional shape. As will be explained in detail below, the side rails 12 are formed by a high velocity hydroforming process in accordance with the present invention.

The cross members 14 may be secured to the side rails 12 by welding, riveting, bolting, or other suitable means. The shape of the cross members 14 may vary widely depending on a number of factors. These factors include the types of loads, if any, the cross member 14 may be supporting and the location where the cross member 14 is attached to the side rails 12. Typical cross sectional shapes of the cross members 14 include rectangular, square, circular, C-shaped or H-shaped. Both closed channel and open channel structures are used in making the cross members 14. Cross members 14 having a tubular cross-sectional shape may be formed by a high velocity hydroforming process in accordance with the present invention.

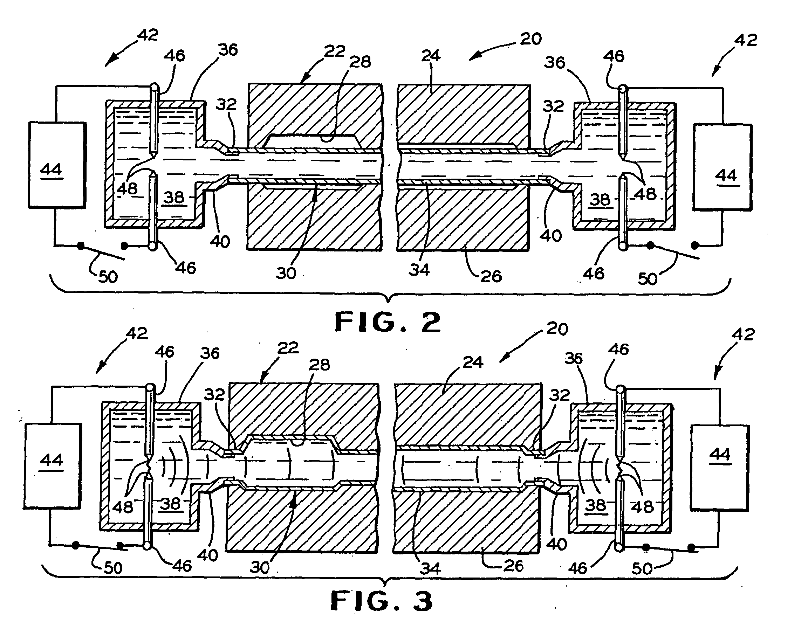

There is illustrated in Figs. 2 and 3 a forming apparatus, indicated generally at 20, for performing the high velocity hydroforming process of the present invention. The apparatus 20 includes a die 22, having a pair of die halves or blocks. More specifically, the die 22 may include an upper die block 24 and a lower die block 26. The upper die block 24 and the lower die block 26 are movable toward each other between an open position and a closed position. The pair of die blocks 24 and 26 are shown in the closed position in Fig. 2. Together, the upper die block 24 and the lower die block 26 form a sealed internal die cavity 28 when they are in their closed positions. While most hydroforming apparatuses 20 include a two-piece sectional die, it should be appreciated that the main die 22 of the hydroforming apparatus 20 may include multiple die blocks as necessary to achieve the desired final shape. In addition, the terms "upper" and lower" as they are applied to the die blocks 24 and 26 are not limiting in that the blocks 24 and 26 can be reversed or even turned from side to side.

The high velocity hydroforming process expands a hollow tubular member 30 to conform to the shape of the die cavity 28. The tubular member 30 is positioned within the die cavity 28 between the upper and lower die blocks 24 and 26. The shape and size of the die cavity 28 is configured to match the desired shape and size of the final high velocity hydroformed product, such as a side rail 12 or a cross member 14 of the vehicle frame 10. Typically, the tubular member 30 has a substantially uniform wall thickness, and defines a substantially uniform outer diameter, although such is not necessary. For example, the tubular member 30 may have other closed cross sectional configurations, such as square or rectangular. Also, the tubular member 30 may be formed from a single piece of material as shown, or may be fabricated from two or more pieces of material which are secured together, such as by welding. For the purpose of illustrating the steps in the method of this invention, the hollow tubular member 10 may be viewed as having a pair of ends 32 and a center section 34, wherein the center section 34 is positioned within the die cavity 28. The tubular member 30 is preferably formed of a relatively rigid, but deformable material, such as steel or other metallic materials. While steel is preferred, other suitable materials can be used, such as aluminum, magnesium, or any suitable metal alloy.

The process of high velocity hydroforming involves filling the tubular member 30 with a fluid and then creating of a shock wave within the fluid to expand the tubular member 30, as will be explained in detail below. Accordingly, the apparatus 20 includes a pair of fluid vessels, indicated generally at 36, containing a source of fluid 38 used for filling the tubular member 30. The source of fluid 38 is in fluid communication with the interior of the tubular member 30 via a pair of sealing heads, indicated generally at 40. The sealing heads 40 are selectively coupled to the ends 32 of the tubular member 30 to seal fluid within the tubular member 30.

The apparatus 20 further includes a pair of electric shock wave generators, indicated generally at 42, one for each source of fluid 38. The shock wave generators 42 can be any suitable apparatus which can create a shock wave within the fluid. In a preferred embodiment, the shock wave generators 42 include a capacitor bank 44 which is electrically connected to a pair of electrodes 46. The electrodes 46 are submersed within the source of fluid 38 contained in the fluid vessel 36. The electrodes 46 have ends 48 which are positioned a relatively short distance apart. Switches 50 are electrically connected between the capacitor bank 44 and one of the electrodes 46 to selectively complete and disrupt the electrical path therebetween.

Although the apparatus 20 is shown having a pair of vessels 36, sealing heads 40, and shock wave generators 42, at both ends of the tubular member 30, it should be understood that the apparatus 20 can have a single vessel 36, sealing head 40, and shock wave generator 42 in fluid communication with one end 32 of the tubular member 30. In this case, the other end of the tubular member 30 could be sealed or capped off.

In operation, the high velocity hydroforming apparatus 20 is initially set up by opening the upper and lower die blocks 24 and 26, and then positioning the tubular member 30 in the internal die cavity 28. The upper and lower die blocks 24 and 26 are then moved to a closed position, as illustrated in Figs. 2 and 3. Next, the ends 32 of the tubular member 30 are sealed with the pair of sealing heads 40, as illustrated in Fig. 2. The tubular member 30 is then filled with fluid from the source of fluid 38 contained in the vessels 36. Electric energy is built up in the capacitor banks 44. After sufficient energy has been stored in the capacitor banks 44, the switches 50 are actuated to complete the electrical path between the capacitor banks 44 and the respective electrodes 46. A high current electric arc is discharged across the ends 48 of the electrodes 46. The electric arc rapidly vaporizes the surrounding fluid and creates a high pressure pulse or shock wave which is propagated at a relatively high velocity through the fluid. The fluid can be any suitable medium which permits the propagation of the shock wave, such as water or oil. The shock wave rapidly deforms the tubular member 30 by expanding the center section 34 in an outwardly direction to conform to the shape of the die cavity 28, as illustrated in Fig. 3.

The rapid deformation or expansion of the tubular member 30 during the high velocity hydroforming creates a hyperplastic metal forming condition. The hyperplastic metal forming condition allows a relatively large amount of elongation of the tubular member 30 to occur. This is particularly advantageous for metals which have a relatively low metal formability, such as various aluminum and magnesium alloys. The greater expansion capabilities of the high velocity hydroforming process can provide for greater design flexibility in the formation of frame components, such as the side rails 12 of the vehicle frame 10 illustrated in Fig. 1.

For some high velocity hydroforming applications, it may be necessary to "end feed" the ends 32 of the tubular member 30 during deformation and expansion. During end feeding, one or both of the ends 32 of the tubular member 30 are pushed inward towards the die cavity 28, as is illustrated in Fig. 3. As the ends 32 of the tubular member 30 are moved inwardly, the length of the deformed tubular member 30 is decreased as the width of the tubular member 30 is increased to conform to the shape of the die cavity 28. End feeding helps to provide a relatively uniform wall thickness throughout the length of the tubular member 30 during deformation. The ends 32 can be moved by any suitable mechanism, such as by hydraulic actuators (not shown) operatively connected to the sealing heads 40. Because the process involves high velocity hydroforming, the end feeding of the tubular member 30 would likely be performed at a high velocity also.

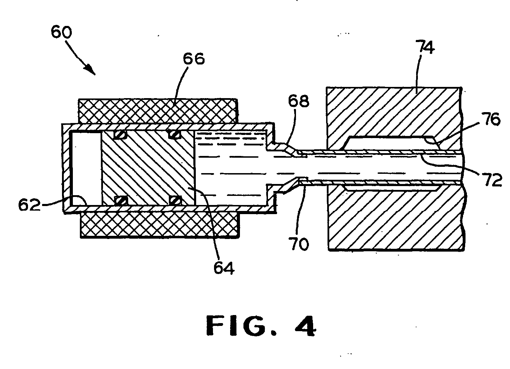

The shock wave which propagates through the fluid within the tubular member 20 can be created by other methods, such as by mechanical actuators. There is shown in Fig. 4, a mechanical shock wave generator, indicated generally at 60. The mechanical shock wave generator 60 includes a fluid cylinder 62 which is filled with a fluid, such as water or oil. A piston armature 64 is disposed within the fluid cylinder 62. The piston armature 64 is actuated by an electromagnet 66. The mechanical shock wave generator 60 further includes a sealing head 68 similar in function to the sealing heads 40 illustrated in Figs. 2 and 3. The sealing head seals an end 70 of a tubular member 72 which is positioned within a die 74, similar to the die 22 illustrated in Figs. 2 and 3. The die 74 has an internal die cavity 76 which is configured to match the desired shape and size of the final high velocity hydroformed product, such as the side rails 12 or cross members 14 of the vehicle frame 10 illustrated in Fig. 1.

In operation, the electromagnet 66 is energized to rapidly accelerate the piston armature 64 in a direction toward the tubular member 72. The rapid acceleration of the piston armature 64 creates a shock wave in the fluid contained in the fluid cylinder 62 to cause the tubular member 72 to expand and conform to the shape of the internal die cavity 76 of the die 74. If desired, the mechanical shock wave generator 60 can include an end feeding apparatus to push the end 70 of the tubular member 72 inward towards the die cavity 76. Of course, a pair of mechanical shock wave generators 60 can be positioned on either end of the tubular member 72, to simultaneously deform the tubular member 72.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method for high velocity hydroforming a vehicle frame member, said method comprising the steps of:
a. providing a die having an internal die cavity;
b. providing a tubular member;
c. positioning said tubular member within said die cavity;
d. filling said tubular member with a fluid; and
e. creating a shock wave within said fluid to expand said tubular member to conform to the shape of the die cavity, thereby forming a vehicle frame member.

2. The method of Claim 1 further including the step of feeding an end of said tubular member into said die cavity during the expansion of said tubular member.

3. The method of Claim 1, wherein said shock wave is created by discharging an electric arc within said fluid.

4. The method of Claim 1, wherein said shock wave is created by rapidly advancing a piston within a fluid cylinder in communication with said fluid.

5. The method of Claim 4, wherein said piston is advanced by an electromagnetic field.
